# EUROPEAN PATENT APPLICATION

(11) **EP 4 787 238 A1**
(43) Date of publication of application: **05.08.2026**
(21) Application number: 25158855.4
(22) Date of filing: 19.02.2025
(51) Int. Cl.: G06N 3/047, G06N 3/063, G06N 3/0455

(54) **SYSTEMS AND METHODS FOR EFFICIENT MODEL EXECUTION ON MACHINE-LEARNING ACCELERATORS**

(30) Priority: 29.01.2025 US 202563751014 P
(71) Applicant: GOOGLE LLC, Mountain View CA 94043 (US)
(72) Inventor: Akin, Berkin, Mountain View, 94043 (US); Nekuii, Mehran, Mountain View, 94043 (US); Shih, Yichang, Mountain View, 94043 (US)
(74) Representative: Marks & Clerk GST

(57) **Abstract**

Methods, systems, and apparatus for reducing latency of configuration of image sensor and image signal processor. A computing system can include a machine learning (ML) processing engine that can process denoising diffusion ML models for execution on statically compiled ML accelerators. The system can determine that a partitioned graph representation, which includes connected subgraphs that each represent at least one layer of the neural network of the ML model, forms a directed acyclic graph. The system can insert cache nodes in the graph representation, where each cache node corresponds to a respective subgraph and is configured to cache output of the respective subgraph. The system can generate an execution dataflow graph including a plurality of iterations of the partitioned graph representation, where, at one or more iterations during model inference operations, the execution dataflow graph uses inputs from cache nodes and excludes execution of subgraphs corresponding to the cache nodes.

## Description

### TECHNICAL FIELD

This specification relates to neural networks, and more particularly to systems and methods for efficient execution of neural network models on machine learning accelerators.

### BACKGROUND

Generative models are commonly used to generate new data instances that resemble a dataset on which the model is trained. For example, generative models can be employed to generate images, text, audio and video. The generative models learn underlying patterns or distributions of data to create new, similar data. One class of generative models include diffusion models. Diffusion models add noise to training data over several iterations. The diffusion model is then trained to reverse the noising process. In particular, the diffusion model is trained to denoise the data step-by-step over several iterations, effectively reconstructing the original data from the noisy version. Once trained, the diffusion model can generate new data by starting with random noise and applying the learned denoising steps in reverse order. This process gradually transforms the noise into a coherent and realistic data instance.

### SUMMARY

Diffusion models typically suffer from slow inference speed. This is due to the iterative, step-by-step denoising process that is not readily amenable to parallel computation. One approach to speeding up the execution of diffusion models is to use caching schemes, where data such as tensors generated in the model's one iteration can be cached and used in another iteration. In iterations where the cached data is used, a portion of the model can be excluded from execution. These caching schemes require conditional execution or flow to implement the inclusion or exclusion of portions of the model from execution. Several machine learning accelerators that are used in edge devices, have a simple instruction set architecture that enables the accelerators to run with low power on edge devices. These simple instruction set architectures may not provide the conditional flow capability that is required by the caching schemes.

This specification describes techniques for executing denoising diffusion machine learning models. In particular, the techniques enable executing these models on statically compiled machine learning accelerators with increased efficiency and reduced power. The techniques discussed herein can include processing a partitioned graph representation of a neural network that implements the machine learning model. The partitioned graph representation can include connected subgraphs, where each subgraph includes one or more layers of the neural network. A plurality of cache nodes are inserted into the partitioned graph representation, where the cache node is configured to cache output of a corresponding subgraph. An execution dataflow graph can be generated using the partitioned graph representation where the dataflow graph includes a plurality of iterations of the partitioned graph representation, and where at one or more iterations, the execution dataflow graph uses inputs from one or more cache nodes instead of the corresponding subgraphs. As a result, one or more subgraphs are eliminated from execution. A compiler can separately and statically compile each distinct subgraph in the execution dataflow graph. At runtime, for each iteration, the machine learning accelerators can use the executable code for each subgraph that is not excluded for execution in that iteration to execute the model.

Particular examples of the subject matter described in this specification can be implemented so as to realize one or more of the following advantages. Generating an execution dataflow graph that does not include any control flow or conditional execution enables the use of caching techniques for denoising diffusion machine learning models executing on machine learning accelerators that do not support control flow or conditional execution. ML accelerators used in edge devices are designed for low power, and have simple instruction set architectures that may not support control flow or conditional execution. As a result, traditional caching techniques, which require control flow or conditional execution cannot be implemented on these accelerators. In contrast, the caching techniques discussed herein, which do not require control flow or conditional execution support, can be readily implemented on the machine learning accelerators. Thus, caching techniques for denoising diffusion machine learning models can be implemented in edge devices.

Eliminating the execution of one or more portions of the model and instead using a cached output of the portion from a previous iteration can reduce the computation time of the execution of the model as well as the power consumption in executing the model. The techniques discussed herein can mark for exclusion subgraphs that are redundant (i.e., whose output is not used) during an iteration of execution of the model. As a result, complex neural network computations associated with the excluded portion are instead replaced by memory store and fetch operations associated with caching. As the execution time and the power consumption of such memory operations are substantially less than that for the excluded portions, over several iterations substantial speedup and power savings can be attained.

A user or a user application can control the number of subgraphs that are excluded from execution by controlling the partitioning as well as the frequency with which cache nodes provide cached data, instead of the output of an excluded subgraph, to another subgraph during the iterative execution of the model. The user or the user application can increase the frequency to reduce power consumption and execution time but at the cost of decreased output quality of the model. Nevertheless, the techniques discussed herein provide the user or the user application the ability to control the power consumption and execution time vs. output quality of the model when executed over several iterations.

One general aspect includes a method for executing a denoising diffusion machine learning model on one or more machine learning accelerators. The method includes determining, by a computing device, that a partitioned graph representation of the neural network forms a directed acyclic graph, where the partitioned graph representation includes connected subgraphs that each represent at least one layer of the neural network; inserting, by the computing device, one or more cache nodes in the partitioned graph representation, where each cache node corresponds to a respective subgraph in the connected subgraphs and is configured to cache output of the respective subgraph during model execution; generating, by the computing device, an execution dataflow graph including a plurality of iterations of the partitioned graph representation, where, at one or more iterations during model inference operations, the execution dataflow graph uses inputs from the one or more cache nodes and excludes execution of subgraphs corresponding to the one or more cache nodes; and separately compiling, by the computing device, each distinct subgraph in the execution dataflow graph to generate runtime code for execution on the one or more machine learning accelerators.

Implementations may include one or more of the following features. The method where the output of the respective subgraph during model execution is an output tensor. For each iteration of the plurality of iterations, the execution dataflow graph excludes from execution subgraphs feeding into a cache node that feeds into another subgraph. The execution dataflow graph, for an iteration, excludes execution of a subgraph by marking the subgraph to not execute during runtime for that iteration. The one or more machine learning accelerators execute the plurality of iterations during model inference operations based on separately compiled code for each subgraph. The method may include determining an iteration frequency with which a cache node corresponding to a particular subgraph is to provide an input to a subsequent subgraph; and determining, based on the iteration frequency, whether the cache node is to provide input to the subsequent subgraph. The method further may include: based on the iteration frequency: determining, at a first iteration, that the cache node is to provide a first input to the subsequent subgraph and that the particular subgraph is to be excluded during model execution; determining, at a second iteration, that the particular subgraph is to provide a second input to each of cache node and the subsequent subgraph; and determining, at a third iteration, that the particular subgraph is to provide a third input to a subsequent subgraph and that the cache node is to be excluded during model execution. The partitioned graph representation is a first partition graph representation and the denoising diffusion machine learning model is a first denoising diffusion machine learning model, the method may include: determining that a second partitioned graph representation of a neural network implementing a second denoising diffusion machine learning model does not form a directed acyclic graph; and ceasing execution of the second denoising diffusion machine learning model.

One general aspect includes one or more non-transitory computer-readable storage media storing instructions that when executed by one or more processors cause the one or more processors to perform operations for executing a denoising diffusion machine learning model on one or more machine learning accelerators. The operations include determining, by a computing device, that a partitioned graph representation of the neural network forms a directed acyclic graph, where the partitioned graph representation includes connected subgraphs that each represent at least one layer of the neural network; inserting, by the computing device, one or more cache nodes in the partitioned graph representation, where each cache node corresponds to a respective subgraph in the connected subgraphs and is configured to cache output of the respective subgraph during model execution; generating, by the computing device, an execution dataflow graph including a plurality of iterations of the partitioned graph representation, where, at one or more iterations during model inference operations, the execution dataflow graph uses inputs from the one or more cache nodes and excludes execution of subgraphs corresponding to the one or more cache nodes; and separately compiling, by the computing device, each distinct subgraph in the execution dataflow graph to generate runtime code for execution on the one or more machine learning accelerators.

The computer-readable storage media where the output of the respective subgraph during model execution is an output tensor. For each iteration of the plurality of iterations, the execution dataflow graph excludes from execution subgraphs feeding into a cache node that feeds into another subgraph. The execution dataflow graph, for an iteration, excludes execution of a subgraph by marking the subgraph to not execute during runtime for that iteration. The one or more machine learning accelerators execute the plurality of iterations during model inference operations based on separately compiled code for each subgraph. The operations may include determining an iteration frequency with which a cache node corresponding to a particular subgraph is to provide an input to a subsequent subgraph; and determining, based on the iteration frequency, whether the cache node is to provide input to the subsequent subgraph. The operations may include: based on the iteration frequency: determining, at a first iteration, that the cache node is to provide a first input to the subsequent subgraph and that the particular subgraph is to be excluded during model execution; determining, at a second iteration, that the particular subgraph is to provide a second input to each of cache node and the subsequent subgraph; and determining, at a third iteration, that the particular subgraph is to provide a third input to a subsequent subgraph and that the cache node is to be excluded during model execution. The partitioned graph representation is a first partition graph representation and the denoising diffusion machine learning model is a first denoising diffusion machine learning model, the operations may include: determining that a second partitioned graph representation of a neural network implementing a second denoising diffusion machine learning model does not form a directed acyclic graph; and ceasing execution of the second denoising diffusion machine learning model.

One general aspect includes a system. The system also includes one or more processors; and one or more storage devices storing instructions that when executed by the one or more processors to perform operations for executing a denoising diffusion machine learning model on one or more machine learning accelerators, where the denoising diffusional machine learning model is implemented using a neural network, the operations may include: determining, by a computing device, that a partitioned graph representation of the neural network forms a directed acyclic graph, where the partitioned graph representation includes connected subgraphs that each represent at least one layer of the neural network; inserting, by the computing device, one or more cache nodes in the partitioned graph representation, where each cache node corresponds to a respective subgraph in the connected subgraphs and is configured to cache output of the respective subgraph during model execution; generating, by the computing device, an execution dataflow graph including a plurality of iterations of the partitioned graph representation, where, at one or more iterations during model inference operations, the execution dataflow graph uses inputs from the one or more cache nodes and excludes execution of subgraphs corresponding to the one or more cache nodes; and separately compiling, by the computing device, each distinct subgraph in the execution dataflow graph to generate runtime code for execution on the one or more machine learning accelerators.

The system where the output of the respective subgraph during model execution is an output tensor. For each iteration of the plurality of iterations, the execution dataflow graph excludes from execution subgraphs feeding into a cache node that feeds into another subgraph. The execution dataflow graph, for an iteration, excludes execution of a subgraph by marking the subgraph to not execute during runtime for that iteration. The one or more machine learning accelerators execute the plurality of iterations during model inference operations based on separately compiled code for each subgraph. The operations may include determining an iteration frequency with which a cache node corresponding to a particular subgraph is to provide an input to a subsequent subgraph; and determining, based on the iteration frequency, whether the cache node is to provide input to the subsequent subgraph. The operations may include: based on the iteration frequency: determining, at a first iteration, that the cache node is to provide a first input to the subsequent subgraph and that the particular subgraph is to be excluded during model execution; determining, at a second iteration, that the particular subgraph is to provide a second input to each of cache node and the subsequent subgraph; and determining, at a third iteration, that the particular subgraph is to provide a third input to a subsequent subgraph and that the cache node is to be excluded during model execution. The partitioned graph representation is a first partition graph representation and the denoising diffusion machine learning model is a first denoising diffusion machine learning model, the operations may include: determining that a second partitioned graph representation of a neural network implementing a second denoising diffusion machine learning model does not form a directed acyclic graph; and ceasing execution of the second denoising diffusion machine learning model.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

Figure 1 is a block diagram of an example computing system.
Figure 2 shows a block diagram of an example ML model processing engine.
Figure 3A shows a UNet and UViT high level model architecture of a denoising diffusion machine learning model.
Figure 3B shows a first example partitioning of the model shown in Figure 3A as well as a first example partitioned graph representation of the neural network implementing the denoising diffusion machine learning model shown in Figure 3A.
Figure 3C shows a second example partitioning of the model shown in Figure 3A as well as a second example partitioned graph representation of the neural network implementing the denoising diffusion machine learning model shown in Figure 3A.
Figure 4A shows a partitioned graph representation with a cache node.
Figure 4B shows an example execution dataflow graph based on the partitioned graph representation shown in Figure 4A.
Figure 5A shows a diffusion transformer (DiT) high-level model architecture of a denoising diffusion machine learning model.
Figure 5B shows an example partitioning of the model shown in Figure 5A.
Figure 6A shows a partitioned graph representation with a cache node.
Figure 6B shows an example execution dataflow graph based on the partitioned graph representation shown in Figure 6A.
Figure 7 shows a flow diagram of an example process.

Like reference numbers and designations in the various drawings indicate like elements.

### DETAILED DESCRIPTION

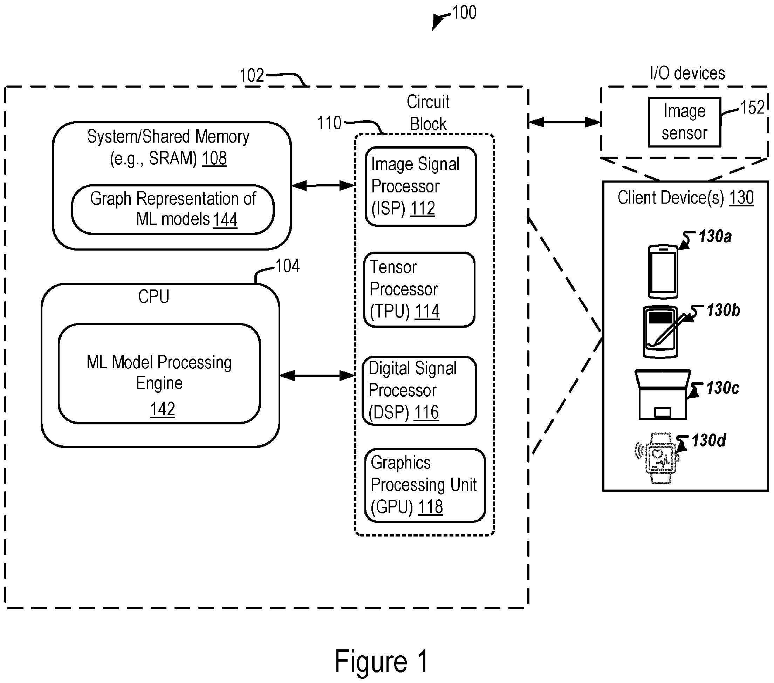

Figure 1 is a block diagram of an example computing system 100. The example computing system 100 can include a system-on-chip 102 ("SoC 102"), which, in turn, can include a central processing unit (CPU) 104, a shared memory 108, and an IP/circuit block 110. The SoC 102 can be implemented in an integrated circuit of an example user/client device 130, consumer device, or mobile device, where each of these devices can include items such as a smartphone 130a, a tablet 130b, a laptop 130c, and a smartwatch or wearable device 130d. The client device 130 may also include other items such as an eNotebook, Netbook, smart speaker, or mobile computer. In some examples, the system 100 and the SoC 102 is an integrated circuit of a desktop computer, network server, or related cloud-based asset. The SoC 102 can also be coupled with an image sensor 152. While Figure 1 shows a single image sensor 152, more than one image sensor can be included. In particular, the image sensor 152 can be part of a client device 130.

The CPU 140 can be a general-purpose CPU (e.g., a single or multi-core CPU). An operating system can run on the CPU 140. Examples of operating systems can include the Android operating system, the iOS operating system, the Windows operating system, etc. The operating system can run one or more image processing applications. For example, image processing applications can include photography applications, video call applications, etc. The operating system can also run generative imaging applications such as text-to-image applications, super-resolution applications, outpainting applications. The generative imaging applications can utilize an image processing stack of the operating system as well as machine learning accelerators on the SoC 102.

The CPU 104 can also run an ML model processing engine 142. The ML model processing engine 142 can run as an application on the operating system of the CPU 104 or can be native to the operating system. The ML processing engine 142 can be stored in the memory 108 and can be loaded into the CPU 104 local memory during execution. In some examples, at least a portion of the ML model processing engine 142 (e.g., the compiler) can be executed on another processor on the SoC 102 or external to the SoC 102. In such instances, the ML processing engine 142 can communicate data with the another processor. The ML model processing engine 142, discussed in detail below, allows the modification of the execution of diffusion models by inserting cache nodes in a manner that can be executed on one or more statically compiled machine learning accelerators.

The memory 108 is a system memory, shared memory, or both. In the example of Figure 1, memory 108 is depicted external to circuit block 110. However, memory 108 can include portions of memory that are: i) specific to circuit block 110, ii) external to circuit block 110, or iii) both. The memory 106 can be random access memory of the SoC 102, such as static random-access memory (SRAM), dynamic random access memory (DRAM), a synchronous DRAM (SDRAM), or double data rate (DDR) SDRAM. In some implementations, aspects of memory 108 are configured as a shared scratchpad memory that supports parallel access of its memory resources by two or more processors of the circuit block 110. The memory 108 can also include various other types of memory, such as high bandwidth memory (HBM), narrow memory (e.g., for storing 8-bit values), wide memory (e.g., for storing 16-bit or 32-bit values), etc.

The circuit block 110 can include an image signal processor (ISP) 112, a tensor processing unit (TPU) 114, a digital signal processor (DSP) 116, and a graphics processing unit (GPU) 118. The circuit block 110 can also be referred to as an IP block 110, where the IP block can include one or more proprietary hardware elements. For example, each of the ISP 112, TPU 114, DSP 116, and GPU 118 can be a respective proprietary IP block (or IP device) of a particular entity or device manufacturer. The TPU 114, the DSP 116 and the GPU 118 can be considered as AI accelerators that can efficiently process AI workloads such as neural network. Applications running on the CPU 104 can offload AI based computations to the TPU 114, DSP 116, and/or the GPU 118.

Some AI accelerators, in particular those AI accelerators that are designed for low power operation, do not provide control flow or dynamic conditional execution features. Eliminating conditional execution features from the AI accelerators permits a simpler instruction set architecture that can be optimized for performance and power. This allows the AI accelerators to be incorporated in edge devices such as battery powered mobile devices. Nevertheless, the lack of conditional execution functions during runtime renders the AI accelerators unusable for traditional caching techniques, which require conditional execution. As discussed below, the ML model processing engine modifies the graph representation of the neural network so that cache nodes can be included without the need for conditional execution.

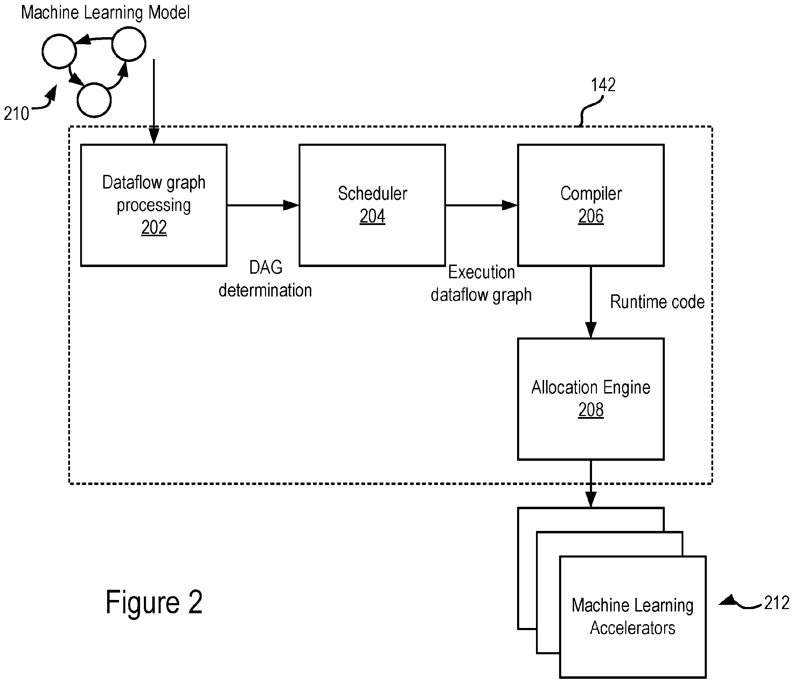

Figure 2 shows a block diagram of an example ML model processing engine 142. The ML model processing engine 142 can include a dataflow graph processing engine 202, a scheduler 204, a compiler 206, and an allocation engine 208. In some examples, the dataflow graph processing engine 202 can receive a partitioned graph representation 210 of a neural network implementing a machine learning model such as a denoising diffusion machine learning model. A user can provide the partitioned graph representation 210 to the ML model processing engine 142. The user can include an application developer, a ML practitioner, etc. In some examples, the user can store the partitioned graph representation 210 in memory and provide the ML model processing engine 142 with a memory address where the partitioned graph representation 210 is stored. In some examples, the partitioned graph representation 210 can be stored as a TensorFlow SavedModel format that includes the complete model with trained parameters and computations. In some examples, the partitioned dataflow graph representation 210 can be in the form of a code or description such as a TensorFlow computation graph description, or computation graph descriptions in other machine learning platforms such as JAX, TensorFlow Lite, Pytorch, etc.

The dataflow graph processing engine 202 can process the partitioned graph representation to determine whether the graph forms a directed acyclic graph (DAG). In some examples, the dataflow graph processing engine 202 can identify the nodes and edges of the partitioned graph representation 201 and then check the presence of cycles in the graph. In some instances, a depth-first search traversal of the graph can be performed. During traversal, the dataflow graph processing engine 202 can keep track of the encountered nodes. If a previously encountered node is traversed again, then a cycle is present in the graph and the graph can be determined to not be a DAG. In other instances, other techniques such as Kahn's algorithm or other topological sorting algorithms can be used. If the dataflow graph processing engine 202 determines that the partitioned graph representation is indeed a DAG, the processing can continue. If, however, the dataflow graph processing engine 202 determines that the partitioned graph representation does not form a DAG, the processing of the graph is terminated. In some examples, the ML model processing engine 142 can report to the user or the user application that the partitioned graph representation does not form a DAG.

The scheduler 204 can insert one or more cache nodes in the partitioned graph representation. The cache nodes represent a caching operation where the output of a subgraph of the partitioned graph representation to which the cache node corresponds is stored in the cache. The stored output of a particular cache node can be used instead of the output of that subgraph in a subsequent iteration of the execution of the partitioned graph representation. The scheduler 204 can generate an execution dataflow graph that includes a plurality of iterations of the partitioned graph representation. The execution dataflow graph can be expressed in a manner similar to the partitioned graph representation. For example, the scheduler 204 can generate the execution dataflow graph using the TensorFlow computation graph description. The ML model processing engine 142 can receive as input information about the placement of the cache node and the frequency (e.g., every n-th iteration) with which the data in the cache is to be provided as input to a subgraph during execution. For example, the input information can specify inclusion of the placement of the cache node between two subgraphs, and using the cached data as input every third iteration. The scheduler 204 can also exclude one or more subgraphs from execution if the subgraphs are redundant on account of using the cached data. The scheduler 204 generates the execution dataflow graph in a manner such that the graph does not result in any conditional executions. That is, the scheduler 204 generates an execution dataflow graph that is devoid of any conditional execution by excluding execution of redundant subgraphs.

The scheduler 204 can provide the execution dataflow graph to the compiler 206. The compiler 206 can be configured to transform the execution dataflow graph into runtime code for execution on one or more statically compiled machine learning accelerators. As mentioned above, the execution dataflow graph can be in the computation graph format, such as the TensorFlow computation graph description. The compiler 206 can extract compilable representation for each subgraph and statically compile each subgraph separately. This removes any dynamism from the compile stage. Instead, the dynamism is shifted to the application logic at runtime, which determines whether to execute a subgraph in each iteration. The compiler 206 can optimize the runtime code for the specific hardware accelerators and the underlying memory architecture. For example, the compiler 206 can optimize the runtime code for memory allocation, memory latency hiding, parallelization, etc. Examples of compilers that can be used to implement the compiler 206 can include XLA, Glow, Apache TVM, etc.

The allocation engine 208 can allocate hardware resources for the execution of the runtime code. For example, the allocation engine 208 can allocate one or more of the machine learning accelerators 212 to execute the runtime code. In some examples, the allocation engine 208 also can allocate memory resources for storing weights, and outputs of the various layers of the neural network executed by the runtime code. The hardware accelerators 212 can include TPUs, GPUs, neural processing units (NPUs), etc. For example, one or more of the NVIDIA GPUs (e.g., A100 series), Google's TPU, Graphcore's Intelligent Processing Unit (IPU), and the like can be used to implement the one or more hardware accelerators 212.

As mentioned above, the ML model processing engine 142 can receive a partitioned graph representation of the neural network implementing a denoising diffusion machine learning model. The partitioned graph representation can be based on one or more neural network model architectures such as, e.g., UNeT, UViT or DiT.

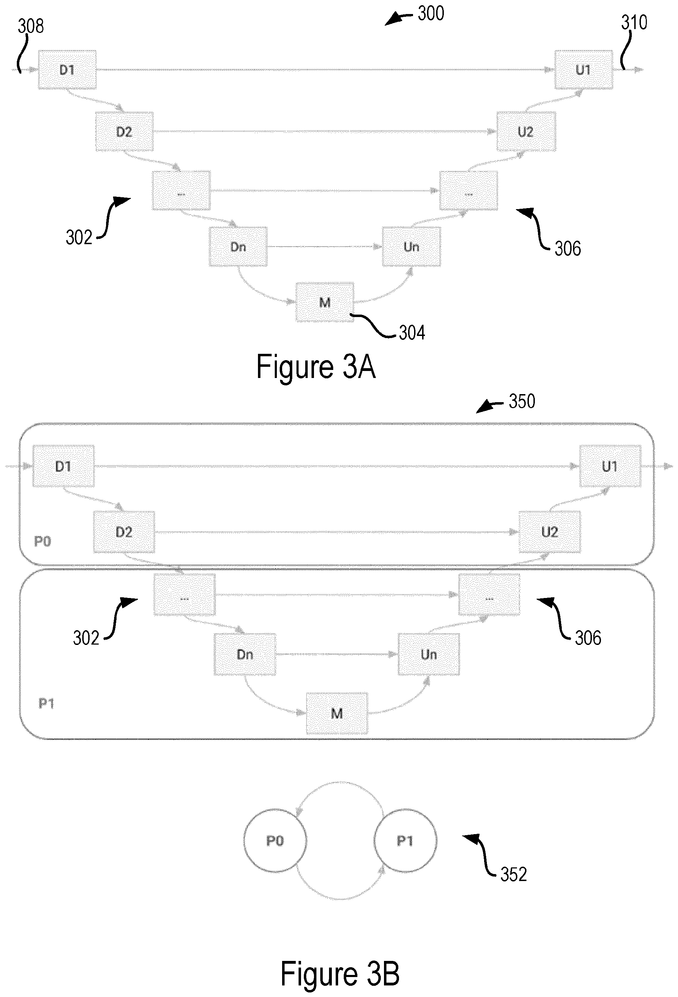

Figure 3A shows a UNeT and UViT high level model architecture of a denoising diffusion machine learning model 300 ("DM 300"). The DM 300 includes a set of encoder steps 302, a middle step 304, and a set of decoder steps 306. The DM 300 receives an input 308, which can be data such as an image, and adds noise at each of the encoder steps 302. The middle step 304 can include residual neural network blocks. The set of decoder steps 306 are trained to regenerate the image back from the noisy image generated by the set of encoder steps 302. The output 310 of the set of decoder steps 306 is a regenerated image.

Figure 3B shows a first example partitioning of the model shown in Figure 3A as well as a first example partitioned graph representation of the neural network implementing the denoising diffusion machine learning model shown in Figure 3A. The first example partitioning 350 includes two partitions P0 and P1. The partition P0 includes encoding steps D1 and D2 as well as decoding steps U1 and U2. The partition P2 includes the remainder of the model 300. Also shown in Figure 3B is the partitioned graph representation 352 of the neural network implementing the model 300 shown in Figure 3A. The partitioned graph representation 352 includes the partitions P0 and P1 shown as nodes of a graph and the edges between P0 and P1 denoting the dataflow between the partitioned model. The partitions P0 and P1 can represent connected subgraphs P0 and P1, where each subgraph can represent at least one layer of the neural network. In this example, the subgraph P0 represents the neural network layers of the encoding steps D1 and D2 as well as decoding steps of U1 and U2, while the subgraph P1 represents neural network layers of the remainder of the model 300. As mentioned above, the partitioned graph representation 352 can be described in a computation graph description such as TensorFlow computation graph description. In some examples, the user or a user application can provide the dataflow graph processing engine 202 the computation graph description of the partitioned graph representation 352 as well as a computation graph description of each of the subgraphs. In some examples, the user or user application can provide the dataflow graph processing engine 202 with the computation graph description of the complete high-level model (e.g., DM 300 shown in Figure 3A) and partitioning boundaries indicating the nodes of the model that are grouped together into subgraphs. In such instances, the dataflow graph processing engine 202 can itself generate the partitioned graph representation 352 from the high-level model and the partitioning boundaries.

In some examples, the dataflow graph processing engine 202 can itself generate partitioning boundaries and then generate the partitioned graph representation based on the graph representation of the model and the partitioning boundaries. Prior to inference operations, the dataflow graph processing engine 202 can generate several partitioning boundaries and determine the power savings and execution time reduction resulting from each of the several partitioning boundaries while maintaining a quality metric of the output of the model (e.g., the image generated by the model having a Fréchet Inception distance (FID) metric of greater than a threshold value. The dataflow graph processing engine 202 can provide the generated partitioning boundaries as well as the corresponding power, efficiency, and quality metrics to the user or the user application. The user or the user application may then select one of the partitioning boundaries to partition the model for inference operations.

Referring to Figure 2, the dataflow graph processing engine 202 can determine whether the partitioned graph representation 352 shown in Figure 3B is a DAG. A DAG is a type of graph whose nodes are directionally related to each other and do not form a directional closed loop. The dataflow graph processing engine 202 can determine that the partitioned graph representation 352 does not form a DAG. This is because the data flows from subgraph P0 to subgraph P1 and again from subgraph P1 to subgraph P0, thereby forming a directional closed loop. As a result, the dataflow graph processing engine 202 can terminate processing the graph representation and can communicate an indication to an application that the partitioned graph representation is not a DAG. It should be noted that the subgraphs are executed atomically. A partitioned graph representation that is not a DAG can create cyclic dependencies that do not conform with the atomic execution of the subgraphs. Therefore, the dataflow graph processing engine 202 ensures that the partitioned graph representation is a DAG before carrying out further processing.

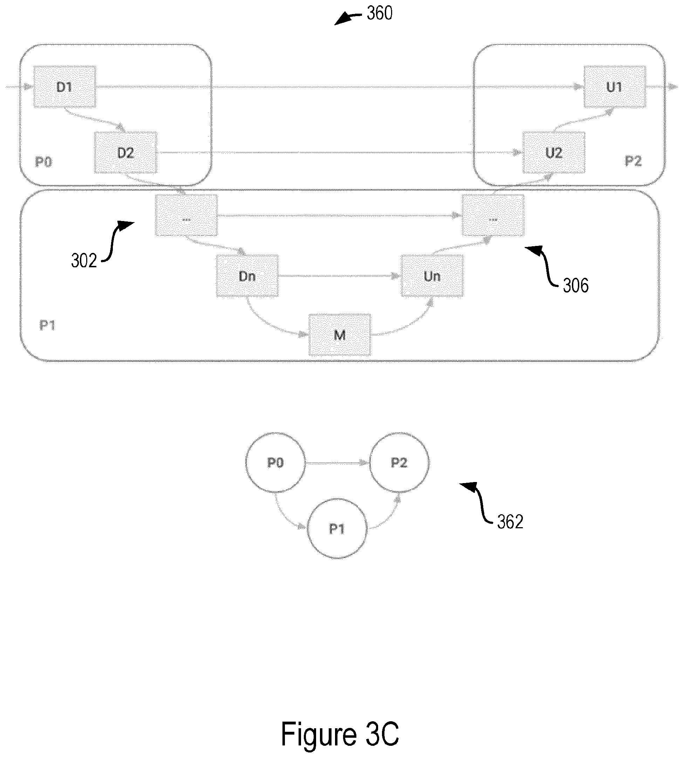

Figure 3C shows a second example partitioning 360 of the model shown in Figure 3A as well as a second example partitioned graph representation 362 of the neural network implementing the denoising diffusion machine learning model shown in Figure 3A. The second example partitioning includes three partitions P0, P1, and P2. The partition P0 includes encoding steps D1 and D2, partition P1 includes decoding steps U1 and U2, while the partition P2 includes the remainder of the model 300. Again, the partitions P0, P1, and P2 can represent connected subgraphs P0, P1 and P2, where each subgraph includes at least one layer of the neural network implementing the diffusion model 300. Figure 3C also shows the second example partitioned graph representation based on the subgraphs P0, P1, and P2. The second example partitioned graph representation 362 includes subgraphs P0, P1, and P2 shown as nodes of the graph and the edges between subgraphs P0, P1, and P2 denoting the dataflow between the partitioned model.

Referring again to Figure 2, the dataflow graph processing engine 202 can determine that the second example partitioned graph representation 362 is indeed a DAG, as the graph does not form a directional closed loop. As a result, the dataflow graph processing engine 202 can provide the graph to the scheduler 204. As discussed in relation to Figure 2, the scheduler 204 can insert one or more cache nodes in the partitioned graph representation.

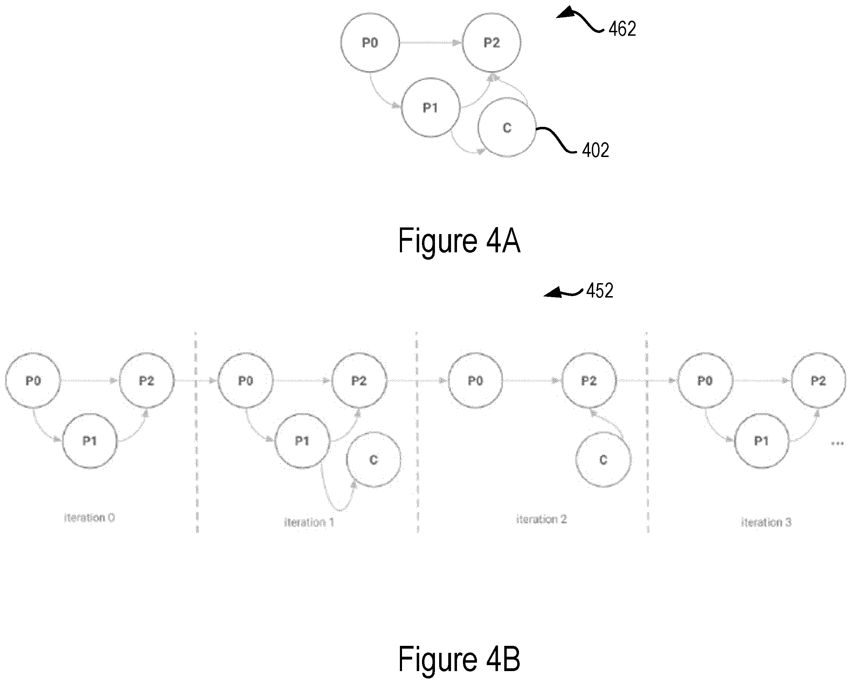

Figure 4A shows a partitioned graph representation 462 with a cache node 402. The ML model processing engine 142 can receive as input a position of the cache node in the partitioned graph representation. In the example shown in Figure 4A, the ML model processing engine 142 receives an input that instructs inserting a cache node corresponding to the subgraph P1. As shown in Figure 4A, the scheduler 204 can insert a cache node C that receives the output of the subgraph P1. The cache node can represent a memory operation where the output of the subgraph P1 is stored in memory and can be retrieved at a later stage during the execution of the model. For example, the memory operation can store the output of the subgraph P1 in the system memory 108 (Figure 1), or a local memory of the CPU 104, or a local memory of one or more of the ML accelerators. The ML model processing engine 142 can receive as input instructions to insert the cache node C between the corresponding subgraph P1 and another adjacent subgraph P2. In effect, the cache node C is inserted between two adjacent nodes and in parallel to the existing edge between the two adjacent nodes. The scheduler 204 can include an edge directed from the first of the two adjacent nodes (subgraph P1) to the cache node indicating that the output of the subgraph P1 is stored in the cache node C. The scheduler 204 can also include a second edge directed from the cache node to the second of the two adjacent nodes (subgraph P2) indicating that the output stored in the memory is provided as input to the subgraph P2. The scheduler 204 can generate an execution dataflow graph that includes a plurality of iterations of the partitioned graph representation based on the partitioned graph representation.

Figure 4B shows an example visual representation of an example execution dataflow graph 450 based on the partitioned graph representation shown in Figure 4A. The scheduler 402 can generate the execution dataflow graph 450 by linearly arranging the iterations of the execution of the partitioned graph representation 462. The portion of the execution dataflow graph 452 shown in Figure 4B includes four iterations: iteration 0, iteration 1, iteration 2, and iteration 3. The output of the subgraph P2 in one iteration is fed as input to the subgraph P0 of the following iteration.

The number of iterations for which the partitioned graph representation is executed can be predetermined. The scheduler 204 can process partitioned graph representation to determine if any subgraphs need to be excluded from execution for each iteration. The scheduler 204 can also take into consideration the requested position and frequency at which the data stored in the cache node is used as input to a subgraph (also referred to as "cache input insertion frequency"). For the example shown in Figure 4A and 4B, the cache node is positioned corresponding to the subgraph P1 such that the cache node is connected in parallel between subgraphs P1 and P2, and the cached data is used as input once every three iterations starting from iteration 2. Of course, this is only an example, and the cache input insertion frequency with which the cached data is used as input can vary. Generally, increasing the cache input insertion frequency can reduce the execution time of the model, but that also reduces the accuracy of the model. Therefore, there is a tradeoff between execution time and the quality of the output of the model.

The scheduler 204, based on the cache input insertion frequency, can determine for each iteration whether a cache node is to provide input to a subsequent subgraph. For example, with the cache input insertion frequency of every three iterations starting from iteration 2, the scheduler 204 can determine that the cache node needs to provide an input to the subgraph P2 every three iterations starting at iteration 2. Thus, in iteration 2, the cache node C provides an input to the subgraph P2. The scheduler 204 can also determine for an iteration where the cache node provides an input to a consuming subgraph that a producer subgraph that provides its output to the cache node in a previous iteration, is to be excluded from execution. For example, in iteration 2, the cache node provides the input to the subgraph P2, and the input stored in the cache node C is provided by the producer subgraph P1 in the previous iteration 1. Therefore, in iteration 2, the scheduler 204 can mark the subgraph P1 for non-execution. The scheduler 204 also can determine for another iteration that the producing subgraph is to provide an input to both the cache node and a consuming subgraph. For example, the scheduler 204 can determine that the subgraph P1 provides an input (i.e., the output of the subgraph P1) to both the cache node and the consuming subgraph P2. Furthermore, the scheduler 204 can determine that the cache node is not executed for iterations where the producing subgraph provides the input to the consuming subgraph. For example, in iteration 0, the subgraph P1 provides the input to the subgraph P2, and no cache node is executed.

Generally, the scheduler 204 can, for each iteration, determine based on the cache input insertion frequency, whether the cache node provides an input to a consuming subgraph. If the cache node provides an input to the consuming subgraph in the iteration, then the cache node is executed to provide the input to the consuming subgraph, and the subgraph that produced the input stored in the cache is excluded from execution (e.g., subgraph P1 is excluded from execution in iteration 2 because subgraph P1 produced the input stored in the cache in iteration 1). For the first iteration where the cache node does not provide an input to a consuming subgraph, the scheduler 204 determines whether in the next iteration the cache node provides an input to a consuming subgraph. If the cache node does provide an input to the consuming subgraph in the next iteration, then in the first iteration the cache node consumes an output from a producing subgraph (e.g., in iteration 1, cache node C does not provide an input to the consuming subgraph P2, and the next iteration, iteration 2, the cache node provides an input to the consuming subgraph P2. In this case, in iteration 1, the cache node is executed to save the output of the producing subgraph P1). Additionally, for a first iteration where the cache node does not provide an input to a consuming subgraph, the scheduler 204 determines whether in the next iteration a cache node does not provide an input to a consuming subgraph. If in the next iteration, the cache node does not provide an input to a consuming subgraph, then the cache node is excluded from execution in the first iteration (e.g., for iteration 0, in which the cache node does not provide an input to a consuming subgraph, the scheduler 204 can determine that the next iteration, iteration 1, the cache node C does not provide an input to the consuming subgraph P2. Therefore, the execution of the cache node is excluded in iteration 0). Moreover, the scheduler 204 can determine a subgraph in an iteration that feeds only into an excluded subgraph in the following iteration. As the subgraph in the following iteration is excluded, the subgraph only feeding into the excluded subgraph in the previous iteration can also be excluded. The scheduler 204 can utilize a dataflow liveness/reachability analysis algorithm to determine if a node or a subgraph needs to be marked for non-execution. For example, algorithms such as dead-code elimination, dead-code removal, dead-code stripping, etc. can be used to determine subgraphs that are redundant and can be removed from execution.

It should be noted that the cache node execution in an iteration can be different based on whether the cache node C is consuming or providing inputs. For example, in iteration 1, where the cache node C consumes the output of the subgraph P1, the cache node is executed to store the output of the subgraph P1 in memory. In contrast, in iteration 2, where the cache node C provides an input to the subgraph P2, the cache node is executed to retrieve the output of the subgraph P1 stored in memory and provide as input to the subgraph P2.

As evident from the execution dataflow graph of Figure 4B, execution of the subgraph P1 is eliminated every third iteration starting from iteration 2 and is replaced with two memory operations: one in the previous iteration to store the output of the subgraph P1 in memory, and the second in the same iteration to retrieve the output from memory and provide it as input to the subgraph P2. In other words, execution of complex neural network computations is replaced with substantially low latency and low power memory store and fetch operations. As a result, over a plurality of iterations of the model, both the execution time and power consumption can be reduced.

Referring again to Figure 2, the scheduler 204 can provide the execution dataflow graph to the compiler 206 for runtime code generation. The compiler 206 can statically compile each subgraph of the execution dataflow graph separately. For example, the compiler 206 can process the execution dataflow graph 452 shown in Figure 4B, and statically compile each subgraph, P0, P1, P2, and C separately. As each subgraph is statically compiled, no support for control flow or conditional execution is needed from the ML accelerators. The dynamism of determining whether a subgraph is to be executed is made during runtime based on whether the subgraph has been marked for non-execution. By separately compiling each subgraph, the application logic at runtime can use the separately compiled code for each subgraph to schedule execution of each subgraph during each iteration of the execution of the model. Thus, the caching scheme for reducing execution time and power consumption during the execution of denoising diffusion ML models can be implemented in ML accelerators used in edge devices.

It should be noted that the ML model processing engine 142 can process any graph representation of the model. In the example shown in Figures 3A-4B, the model is represented by the UNeT and UViT high-level model architecture. But other architecture representations can also be processed.

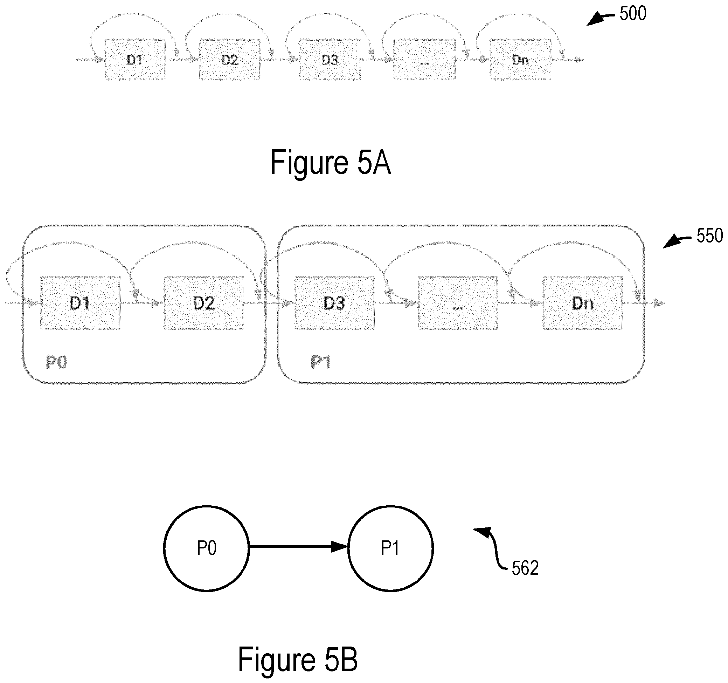

Figure 5A shows a diffusion transformer (DiT) high-level model architecture of a denoising diffusion machine learning model 500, and Figure 5B shows an example partitioning of the model shown in Figure 5A. DiT is a class of diffusion models that are based on the transformer architecture. DiT can provide improved performance by replacing the commonly used UNet convolution neural network backbone with a transformer. The DiT model 500 shown in Figure 5A can include a series of DiT blocks D1, D2, D3. . . Dn, which form the denoising portion of the inference operation using the DiT. The input to the block D1 is noise, and the output of the block Dn is transformed data such as an image. Figure 5B shows an example partitioning 550 where partition P1 includes blocks D1 and D2, while a partition P2 includes the remainder of the blocks of the model. This is an example partition, and it should be understood that various implementations may partition the model differently. Figure 5B also shows a partitioned graph representation 562 where the output of the subgraph P0 is provided as input to the subgraph P1.

The dataflow graph processing engine 202 can determine whether the partitioned graph representation 562 shown in Figure 5B forms a DAG. In this instance, the partitioned graph representation 562 does not form any closed loops. Therefore, the dataflow graph processing engine 202 can determine that the partitioned graph representation 562 can be processed further. The ML model processing engine 142 can receive positional information of the cache node. For example, the ML model processing engine 142 can receive information that the cache node is to be inserted in correspondence with the subgraph P0.

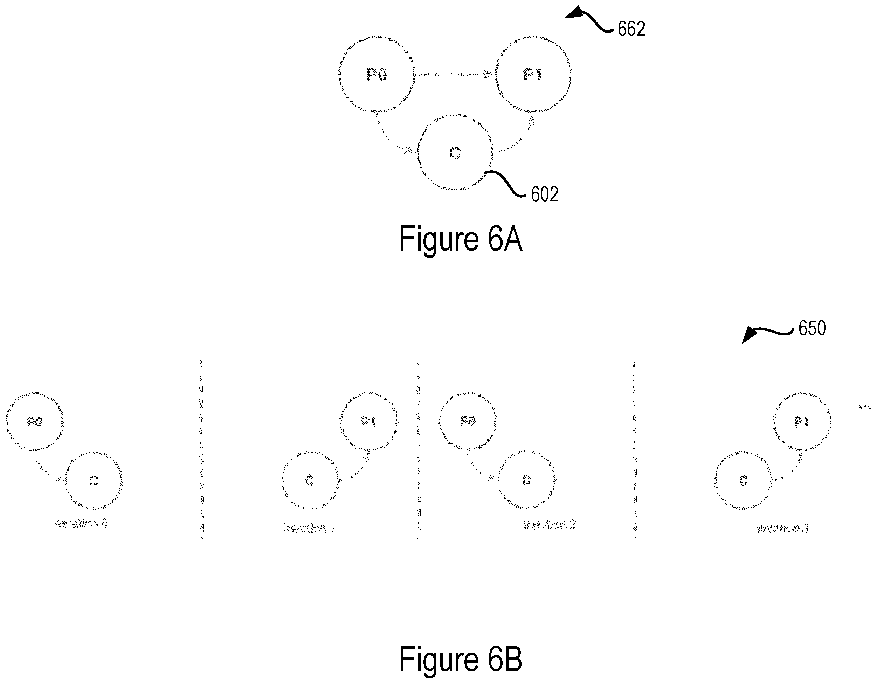

Figure 6A shows a partitioned graph representation 662 with a cache node 602. As the cache node is to be inserted in correspondence with the subgraph P0, the scheduler 204 can insert the cache node 602 to receive the output of the subgraph P0. The scheduler 204 can also connect the cache node 602 such that the output of the cache node can be provided to the subgraph P1. The cache node 602 can represent a memory operation where the output of the subgraph P1 is stored in memory and can be retrieved at a later stage during the execution of the model. For example, the memory operation can store the output of the subgraph P0 in the system memory 108 (Figure 1), or a local memory of the CPU 104, or a local memory of one or more of the ML accelerators.

Figure 6B shows an example execution dataflow graph 650 based on the partitioned graph representation 462 shown in Figure 6A. The scheduler can generate the execution dataflow graph 650 by unrolling the iterations of the execution of the partitioned graph representation 662. The portion of the execution dataflow graph 650 shown in Figure 6B includes four iterations: iteration 0, iteration 1, iteration 2, and iteration 3. The output of the subgraph P1 in one iteration is fed as input to the subgraph P0 of the following iteration. The number of iterations for which the partitioned graph representation is executed can be predetermined. The scheduler 204 can process partitioned graph representation to determine if any subgraphs need to be excluded from execution for each iteration. The scheduler 204 can also take into consideration the requested position and cache input insertion frequency. For example, in Figures 6A and 6B, the cache node is inserted every odd numbered iteration. That is, the execution of the model will consume the cached input every odd iteration.

As discussed in relation to Figures 4A and 4B, the scheduler 204 can determine redundant nodes or subgraphs and remove them from execution. The scheduler 204, for each iteration, can determine based on the cache input insertion frequency whether the cache node provides an input to the consuming subgraph. If the cache node provides an input to the consuming subgraph in the iteration, then the cache node is executed to provide the input to the consuming subgraph, and the subgraph that produced the input stored in the cache is excluded from execution. For example, in Figure 6B, the subgraph P0 is excluded from execution in iteration 1 because subgraph P0 produced the input stored in the cache node in iteration 1. For a first iteration where the cache node does not provide an input to a consuming subgraph, the scheduler 204 determines whether in the next (second) iteration the cache node provides an input to a consuming subgraph. If the cache node does provide an input to a consuming subgraph in the second iteration, then in the first iteration the cache node consumes an output from a producing subgraph. For example, in Figure 6B, the even numbered iteration, iteration 0, the cache node does not provide an input to a consuming subgraph, and in the next iteration, iteration 1, the cache node provides an input to the consuming subgraph P1. Therefore, in iteration 0, the cache node is executed to consume the output of the subgraph P0. Additionally, for an iteration where the cache node does not provide an input to a consuming subgraph, the scheduler 204 determines whether the next iteration a cache node does not provide an input to a consuming subgraph, and if it does not, then the cache node is excluded from execution in that iteration. In the execution dataflow graph 650 shown in Figure 6B, there is no iteration where in the next iteration a cache nodes does not provide an input to a consuming subgraph. Therefore, the cache nodes are executed in each iteration, albeit, in even iterations, the cache nodes are executed to save the output of the subgraph P0, and in odd iterations, the cache nodes are executed to retrieve the P0 output and provide the P0 output as input to the subgraph P1.

In some instances, the scheduler 204 can utilize a dataflow liveness/reachability analysis algorithm to determine if a node or a subgraph needs to be marked for non-execution. For example, algorithms such as dead-code elimination, dead-code removal, dead-code stripping, etc. can be used to determine subgraphs that are redundant and can be removed from execution. These algorithms are well known and are commonly used in compiler optimizations. For example, referring again to Figure 6B, in iteration 1, the subgraph P0 is excluded (because, as discussed above, the saved cache node data instead of the output of P0 is provided to the subgraph P1). In iteration 0, the subgraph P1 can be excluded as well for being dead, as the output of subgraph P1 is only provided to the subgraph P0 in iteration 1. As P0 has been excluded from execution in iteration 1, the execution of subgraph P1 in iteration 0 is redundant and can also be excluded.

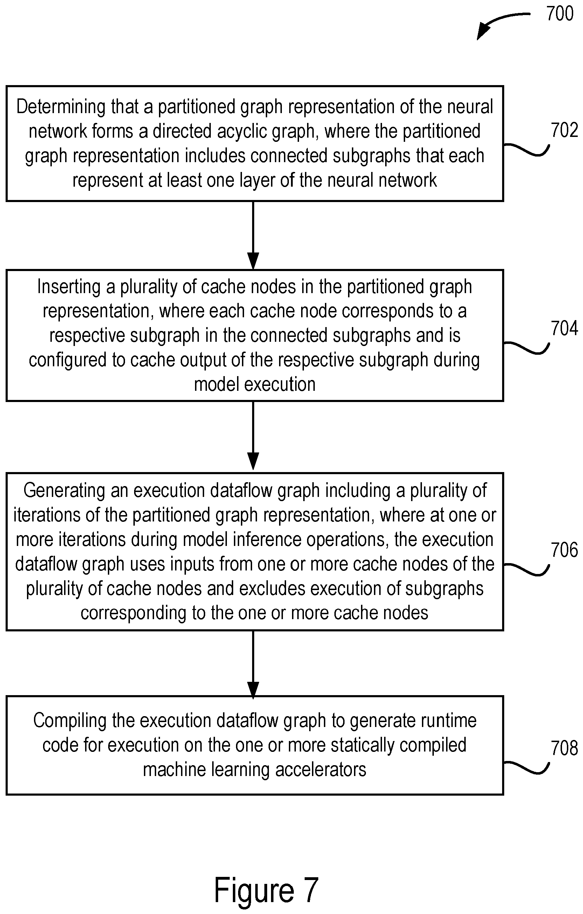

Figure 7 shows a flow diagram of an example process 700. The process 700 can be executed by the ML model processing engine 142 (Figure 1). The process includes determining that a partitioned graph representation of the neural network forms a directed acyclic graph, where the partitioned graph representation includes connected subgraphs that each represent at least one layer of the neural network (702). At least one example of this process stage has been discussed herein in relation to Figures 2 - 5B. For example, referring to Figure 3C, the dataflow graph processing engine 202 can determine whether the partitioned graph representation 362 is a DAG. Further, referring to Figure 5B, the dataflow graph processing engine 202 can determine whether the partitioned graph representation 562 is a DAG.

The process 700 also includes inserting a plurality of cache nodes in the partitioned graph representation, where each cache node corresponds to a respective subgraph in the connected subgraphs and is configured to cache output of the respective subgraph during model execution (704). At least one example of this process stage has been discussed herein in relation to Figures 2-6B. For example, in Figure 4B a cache node 402 is inserted in the partitioned graph representation 462, where the cache node corresponds to the subgraph P1. Similarly, in Figure 6A, a cache node 602 is inserted in the partitioned graph representation 662, where the cache node corresponds to the subgraph P0.

The process 700 also includes generating, by the computing device, an execution dataflow graph including a plurality of iterations of the partitioned graph representation, where, at one or more iterations during model inference operations, the execution dataflow graph uses inputs from one or more cache nodes of the plurality of cache nodes and excludes execution of subgraphs corresponding to the one or more cache nodes (706). At least one example of this process stage has been discussed herein in relation to Figures 2-6B. For example, Figure 4B shows an execution dataflow graph 452 over multiple iterations. The execution dataflow graph 452 uses inputs from the cache node C every third iteration. Further, the execution dataflow graph 452 excludes the execution of the subgraph P1 in iteration 2, where the input to the subgraph P2 is provided from the cache node C. The execution dataflow graph 452 also excludes the execution of the cache node C in iteration 0.

The process 700 further includes compiling the execution dataflow graph to generate runtime code for execution on the one or more statically compiled machine learning accelerators (708). At least one example of this process stage has been discussed above in relation to Figures 2-6B. For example, referring to Figures 2 and 4B, the compiler 206 can extract a compilable representation of each subgraph P0, P1, P2 and C and statically compile each subgraph separately. Statically compiling the subgraphs separately removes the dynamism of which nodes are executed and which are not from the compile stage. The dynamism is shifted to runtime, where the decision to execute a subgraph is made based on whether the subgraph has been marked for non-execution during a particular iteration. As a result, the caching scheme can be implemented for ML accelerators that do not support dynamic control flow or conditional flow execution.

In some examples, the data that is cached during one or more iterations can include output tensors of the subgraph corresponding to the cache node. The output tensors are a result of a neural network computation based on weights and activations received by the subgraph.

In some examples, for each iteration of the plurality of iterations, the execution dataflow graph excludes from execution subgraphs feeding into a cache node that feeds into another subgraph. For example, referring to Figure 4B, in iteration 2, the subgraph P1 is excluded from execution because the subgraph P1 feeds into the cache node, which, in turn, feeds into the subgraph P2. As the output of the P1 in that iteration is never used, the execution of the subgraph P1 in that iteration can be excluded.

In some examples, the execution dataflow graph, for an iteration, excludes execution of a subgraph by marking the subgraph to not execute during runtime for that iteration. In particular, the scheduler 204 can mark the subgraph P1 in iteration 2 in Figure 4B to not execute in iteration 2 when the model is executed. The scheduler 204 can generate a schedule of operations for all the iterations of the model execution. The schedule can include, for each iteration, an indication of which subgraphs are not to be executed. Alternatively, the schedule can include an indication of which subgraphs are to be executed. In either case, the compiler or the application logic that executes the model can, at runtime, refer to the schedule and based on the indication determine whether to execute or not execute a subgraph during the iteration.

In some examples, the process can include determining an iteration frequency with which a cache node corresponding to a particular subgraph is to provide an input to a subsequent subgraph. As discussed above in relation to Figure 4B, the ML model processing engine 142 can receive as input a cache input insertion frequency of every three iterations starting at iteration 2. The cache input insertion frequency can be different for different implementations. In some instances, the frequency can be periodic, such as every three iterations. In some instances, the cache input insertion frequency input can include multiple frequencies for different set of iterations. For example, every third iteration for the first 20 iterations, and every even iteration for iterations 21 to 40. In some other examples, the cache input insertion frequency can include a list of iterations for which the cache node provides input to a subgraph. For example, the list can include the numbers such as 1, 3, 5, 10, . . . that indicate the iteration numbers. Based on the iteration frequency, the ML model processing engine 142 can determine the iterations in which the cache node provides input to the subgraph.

In some examples, the process can include, based on the iteration frequency, determining, at first iteration, that the cache node is to provide a first input to the subsequent subgraph and that the particular subgraph is to be excluded during model execution. For example, referring to Figure 4B, in iteration 2, the cache node C provides an input to the subgraph P2, and the particular subgraph-subgraph P1-is excluded during model execution. The process can further include determining, at a second iteration, that the particular subgraph is to provide a second input to both the cache node and the subsequent subgraph. For example, referring to Figure 4B again, the ML model processing engine 142 can determine that in iteration 1, the subgraph P1 is to provide an input to each of the cache node C and the subgraph P2. The process further includes determining, at a third iteration, that the particular subgraph is to provide a third input to a subsequent subgraph and that the cache node is to be excluded during model execution. For example, the ML model processing engine 142 can determine that at iteration 0, the subgraph P1 is to provide an input to the subgraph P2, and the cache node C is not executed.

In some examples, the process can include determining that a second partitioned graph representation of a neural network implementing a second denoising diffusion machine learning model does not form a DAG. Based on this determination, the process includes ceasing execution of the second denoising diffusion machine learning model. For example, referring to Figure 3B, the partitioned graph representation 350 does not form a DAG. As a result, the ML model processing engine 142 can cease the execution of the model.

The components and processes discussed herein can be implemented on a computing system. In particular, a computing system including a computing device and/or a mobile computing device can be used to implement the techniques described herein. For example, one or more processes, electronic design tools, and data can be implemented on or stored in the computing device or the mobile computing device.

The computing device is intended to represent various forms of digital computers, such as laptops, desktops, workstations, personal digital assistants, servers, blade servers, mainframes, and other appropriate computers. The mobile computing device is intended to represent various forms of mobile devices, such as personal digital assistants, cellular telephones, smart-phones, mobile embedded radio systems, radio diagnostic computing devices, and other similar computing devices. The components shown here, their connections and relationships, and their functions, are meant to be examples only, and are not meant to be limiting.

The computing device includes a processor, a memory, a storage device, a high-speed interface connecting to the memory and multiple high-speed expansion ports, and a low-speed interface connecting to a low-speed expansion port and the storage device. Each of the processor, the memory, the storage device, the high-speed interface, the high-speed expansion ports, and the low-speed interface, are interconnected using various busses, and may be mounted on a common motherboard or in other manners as appropriate. The processor can process instructions for execution within the computing device, including instructions stored in the memory or on the storage device to display graphical information for a GUI on an external input/output device, such as a display coupled to the high-speed interface. In other implementations, multiple processors and/or multiple buses may be used, as appropriate, along with multiple memories and types of memory. In addition, multiple computing devices may be connected, with each device providing portions of the operations (e.g., as a server bank, a group of blade servers, or a multi-processor system). In some implementations, the processor is a single threaded processor. In some implementations, the processor is a multi-threaded processor. In some implementations, the processor is a quantum computer.

The memory stores information within the computing device. In some implementations, the memory is a volatile memory unit or units. In some implementations, the memory is a non-volatile memory unit or units. The memory may also be another form of computer-readable medium, such as a magnetic or optical disk.

The storage device is capable of providing mass storage for the computing device. In some implementations, the storage device may be or include a computer-readable medium, such as a floppy disk device, a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, processor), perform one or more methods, such as those described above. The instructions can also be stored by one or more storage devices such as computer- or machine-readable mediums (for example, the memory, the storage device, or memory on the processor). The high-speed interface manages bandwidth-intensive operations for the computing device, while the low-speed interface manages lower bandwidth-intensive operations. Such allocation of functions is an example only. In some implementations, the high-speed interface is coupled to the memory, the display (e.g., through a graphics processor or accelerator), and to the high-speed expansion ports, which may accept various expansion cards (not shown). In the implementation, the low-speed interface is coupled to the storage device and the low-speed expansion port. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device may be implemented in a number of different forms, as shown in the figure. For example, it may be implemented as a standard server, or multiple times in a group of such servers. In addition, it may be implemented in a personal computer such as a laptop computer. It may also be implemented as part of a rack server system. Alternatively, components from the computing device may be combined with other components in a mobile device, such as a mobile computing device. Each of such devices may include one or more of the computing device and the mobile computing device, and an entire system may be made up of multiple computing devices communicating with each other.

The mobile computing device includes a processor, a memory, an input/output device such as a display, a communication interface, and a transceiver, among other components. The mobile computing device may also be provided with a storage device, such as a micro-drive or other device, to provide additional storage. Each of the processor, the memory, the display, the communication interface, and the transceiver, are interconnected using various buses, and several of the components may be mounted on a common motherboard or in other manners as appropriate.

The processor can execute instructions within the mobile computing device, including instructions stored in the memory. The processor may be implemented as a chipset of chips that include separate and multiple analog and digital processors. The processor may provide, for example, for coordination of the other components of the mobile computing device , such as control of user interfaces, applications run by the mobile computing device , and wireless communication by the mobile computing device .

The processor may communicate with a user through a control interface and a display interface coupled to the display. The display may be, for example, a TFT (Thin-Film-Transistor Liquid Crystal Display) display or an OLED (Organic Light Emitting Diode) display, or other appropriate display technology. The display interface may include appropriate circuitry for driving the display to present graphical and other information to a user. The control interface may receive commands from a user and convert them for submission to the processor. In addition, an external interface may provide communication with the processor, so as to enable near area communication of the mobile computing device with other devices. The external interface may provide, for example, for wired communication in some implementations, or for wireless communication in other implementations, and multiple interfaces may also be used.

The memory stores information within the mobile computing device. The memory can be implemented as one or more of a computer-readable medium or media, a volatile memory unit or units, or a non-volatile memory unit or units. An expansion memory may also be provided and connected to the mobile computing device through an expansion interface, which may include, for example, a SIMM (Single In Line Memory Module) card interface. The expansion memory may provide extra storage space for the mobile computing device or may also store applications or other information for the mobile computing device. Specifically, the expansion memory may include instructions to carry out or supplement the processes described herein and may include secure information also. Thus, for example, the expansion memory may be provided as a security module for the mobile computing device and may be programmed with instructions that permit secure use of the mobile computing device. In addition, secure applications may be provided via the SIMM cards, along with additional information, such as placing identifying information on the SIMM card in a non-hackable manner.

The memory may include, for example, flash memory and/or NVRAM memory (nonvolatile random access memory), as discussed below. In some implementations, instructions are stored in an information carrier such that the instructions, when executed by one or more processing devices (for example, processor), perform one or more methods, such as those described above. The instructions can also be stored by one or more storage devices, such as one or more computer- or machine-readable mediums (for example, the memory, the expansion memory, or memory on the processor). In some implementations, the instructions can be received in a propagated signal, for example, over the transceiver or the external interface.

The mobile computing device may communicate wirelessly through the communication interface, which may include digital signal processing circuitry in some cases. The communication interface may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), LTE, 4G/5G/6G cellular, among others. Such communication may occur, for example, through the transceiver using a radio frequency. In addition, short-range communication may occur, such as using a Bluetooth, Wi-Fi, or other such transceiver (not shown). In addition, a GPS (Global Positioning System) receiver module may provide additional navigation- and location-related wireless data to the mobile computing device, which may be used as appropriate by applications running on the mobile computing device.

The mobile computing device may also communicate audibly using an audio codec, which may receive spoken information from a user and convert it to usable digital information. The audio codec may likewise generate audible sound for a user, such as through a speaker, e.g., in a handset of the mobile computing device. Such sound may include sound from voice telephone calls, may include recorded sound (e.g., voice messages, music files, among others) and may also include sound generated by applications operating on the mobile computing device.

The mobile computing device may be implemented in a number of different forms, as shown in the figure. For example, it may be implemented as a cellular telephone. It may also be implemented as part of a smart-phone, personal digital assistant, or other similar mobile device.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows can also be performed by special purpose logic circuitry, e.g., an FPGA or an ASIC, or by a combination of special purpose logic circuitry and one or more programmed computers. Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. -While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method for executing a denoising diffusion machine learning model on one or more machine learning accelerators, wherein the denoising diffusional machine learning model is implemented using a neural network, the method comprising:
determining, by a computing device, that a partitioned graph representation of the neural network forms a directed acyclic graph, wherein the partitioned graph representation includes connected subgraphs that each represent at least one layer of the neural network;
inserting, by the computing device, one or more cache nodes in the partitioned graph representation, wherein each cache node corresponds to a respective subgraph in the connected subgraphs and is configured to cache output of the respective subgraph during model execution;
generating, by the computing device, an execution dataflow graph including a plurality of iterations of the partitioned graph representation, wherein, at one or more iterations during model inference operations, the execution dataflow graph uses inputs from the one or more cache nodes and excludes execution of subgraphs corresponding to the one or more cache nodes; and
separately compiling, by the computing device, each distinct subgraph in the execution dataflow graph to generate runtime code for execution on the one or more machine learning accelerators.

2. The method of claim 1, wherein the output of the respective subgraph during model execution is an output tensor.

3. The method of claims 1 or 2, wherein, for each iteration of the plurality of iterations, the execution dataflow graph excludes from execution subgraphs feeding into a cache node that feeds into another subgraph.

4. The method of claims 1, 2 or 3 wherein the execution dataflow graph, for an iteration, excludes execution of a subgraph by marking the subgraph to not execute during runtime for that iteration.

5. The method of any preceding claim, wherein the one or more machine learning accelerators execute the plurality of iterations during model inference operations based on separately compiled code for each subgraph.

6. The method of any preceding claim, further comprising:
determining an iteration frequency with which a cache node corresponding to a particular subgraph is to provide an input to a subsequent subgraph; and
determining, based on the iteration frequency, whether the cache node is to provide input to the subsequent subgraph.

7. The method of claim 6, further comprises:
based on the iteration frequency:
determining, at a first iteration, that the cache node is to provide a first input to the subsequent subgraph and that the particular subgraph is to be excluded during model execution;
determining, at a second iteration, that the particular subgraph is to provide a second input to each of cache node and the subsequent subgraph; and
determining, at a third iteration, that the particular subgraph is to provide a third input to a subsequent subgraph and that the cache node is to be excluded during model execution.

8. The method of any preceding claim, wherein the partitioned graph representation is a first partition graph representation and the denoising diffusion machine learning model is a first denoising diffusion machine learning model, the method comprising:
determining that a second partitioned graph representation of a neural network implementing a second denoising diffusion machine learning model does not form a directed acyclic graph; and
ceasing execution of the second denoising diffusion machine learning model.

9. One or more non-transitory computer-readable storage media storing instructions that when executed by one or more processors cause the one or more processors to perform operations for executing a denoising diffusion machine learning model on one or more machine learning accelerators, wherein the denoising diffusional machine learning model is implemented using a neural network, the operations comprising the method of any preceding claim.

10. A system, comprising:
one or more processors; and
one or more storage devices storing instructions that when executed by the one or more processors to perform operations for executing a denoising diffusion machine learning model on one or more machine learning accelerators, wherein the denoising diffusional machine learning model is implemented using a neural network, the operations comprising the method of any preceding claim.
